# NEUE EUROPÄISCHE PATENTSCHRIFT

(11) **EP 2 463 092 B2**
(45) Veröffentlichungstag und Bekanntmachung des Hinweises auf die Entscheidung über den Einspruch: **16.11.2016**
(45) Hinweis auf die Patenterteilung: 17.07.2013
(21) Anmeldenummer: 10193499.0
(22) Anmeldetag: 02.12.2010
(51) Int. Cl.: B32B 27/00, B60R 13/02

(54) **Innenraum-Verkleidungsbauteil für ein Kraftfahrzeug**
Interior cladding component for a motor vehicle
Composant d'habillage de pièce intérieure pour un véhicule automobile

(43) Veröffentlichungstag der Anmeldung: 13.06.2012
(73) Patentinhaber: International Automotive Components Group GmbH, 47804 Krefeld (DE)
(72) Erfinder: Ankele, Rainer, 85643, Steinhöring (DE)
(74) Vertreter: Liesegang, Eva

(56) Entgegenhaltungen:
- DE-A1- 10 052 693

## Beschreibung

Die Erfindung betrifft ein Formteil, insbesondere einen Innenraum-Verkleidungsbauteil für ein Kraftfahrzeug sowie ein Verfahren zu dessen Herstellung.

Im Stand der Technik ist es bekannt, Innenraum-Verkleidungsbauteile von Kraftfahrzeugen, wie eine Instrumententafel, eine Türverkleidung, eine Mittelkonsole, eine Hutablage oder dergleichen, aus Faservlies-Materialien herzustellen.

Beispielsweise in der DE 102 08 524 B4 ist ein Verfahren zum Herstellen von Faservlies-Formteilen beschrieben. Das Formteil besteht aus einem Faservlies, das mit einem thermoplastischen Bindemittel versehen und thermisch oder mechanisch zu einem Vorprodukt vorverfestigt wird. Das Vorprodukt wird erwärmt, bis das Bindemittel plastifiziert, und in einem Press-Formwerkzeug verpresst. Nach dem Erkalten und Aushärten des Bindemittels zwischen den Fasern des Vlieses erhält man das verfestigte Formteil mit der gewünschten Struktur.

Aus der DE 94 22 147 U1 ist ein Mehrschichtkörper für einen Innenverkleidungsteil eines Kraftfahrzeuges bekannt, mit einer Tragschicht, die eine Naturfaser aufweisende Kernschicht und beidseitig davon angeordnete, Bindemittel und Faser aufweisende Abdeckschichten umfasst.

Weitere Formteile aus Faservlies sind beschrieben in der DE 30 07 343 A1, der DE 10 2008 046 770 A1, in der DE 10 2008 062 200 A1 und in der DE 20 2004 014 470 U1.

Die bekannten Formteile für Innenraum-Verkleidungsbauteile von Kraftfahrzeugen, insbesondere solche aus Faservlies, und noch spezieller solche aus Naturfasern, weisen regelmäßig Deckschichten auf, welche die sichtbaren Oberflächen bilden. Zur Gestaltung der Oberfläche werden z. B. Deckmaterialien, wie Dekor-, PVC-, TPO- oder andere Kunststoff-Folien, Leder oder Textilien verwendet, die gegebenenfalls mit PU-Schaum auf das Formteil aufkaschiert werden. Das Kaschieren der Formteile hat das Ziel, diese gegen äußere Beanspruchung, wie Schläge und Kratzer, das Eindringen von Feuchtigkeit und Schmutz, UV-Einstrahlung und dergleichen zu schützen, die Haptik der Formteile zu verbessern und ein gewünschtes optisches Erscheinungsbild zu erzielen, wie eine bestimmte Farb- oder andere Oberflächengestaltung.

Die DE 20 2004 014 470 U1 schlägt einen Faserverbundwerkstoff mit einer Deckschicht als gebrauchsfähige Oberfläche vor, wobei der Werkstoff aus zwei Vliesschichten besteht, die miteinander verpresst werden, ohne dass eine weitere Oberflächenbehandlung, wie Kaschieren oder Lackieren erfolgt. Solche Bauteile haben den Nachteil, dass ihre Oberfläche sehr anfällig gegen Abrieb und Kratzen sowie gegen das Eindringen von Medien, wie Schmutz und Flüssigkeit, ist. Formteile aus gepresstem Faservlies sind in der Regel offenporig und für den Einsatz im Automobilbereich nicht geeignet.

Die DE 100 52 693 A1 beschreibt ein Laminat, das für innere Konstruktionsteile von Fahrzeugen z.B. als Deckenmaterial verwendet werden kann. Ein Gewebe aus Jutefasern und Polypropylenfasern wird zu einem Nadelverbund-Faservlies verarbeitet und auf eine 3 mm dicke Polypropylenfolie laminiert, um ein Faservlies-Laminat zu bilden, indem der Faservlies-Verbundstoff auf die Oberfläche der Polypropylenfolie laminiert ist.

Es ist eine Aufgabe der Erfindung, ein Formteil und ein Verfahren zu dessen Herstellung anzugeben, dass mit geringem Aufwand aus einem faserverstärkten Verbundwerkstoff hergestellt werden kann und eine solche Oberflächenbeschaffenheit hat, dass es sich für den Einsatz als Innenraum-Verkleidungsbauteil in einem Kraftfahrzeug eignet.

Diese Aufgabe wird durch einen Formteil gemäß Patentanspruch 1 oder 2 sowie durch ein Verfahren gemäß Patentanspruch 16 gelöst.

Die Erfindung sieht ein Formteil, insbesondere einen Innenraum-Verkleidungsbauteil für ein Kraftfahrzeug vor, mit einer Kernlage, welche eine Mischung aus Natur- und/oder Synthetikfasern und thermoplastischen Bindefasern umfasst, die zu einem Vlies verarbeitet ist, und mit einer thermoplastischen Decklage. Die Kernlage und die Decklage sind miteinander verschmolzen, wobei die Decklage so gestaltet ist, dass sie die Sichtfläche des Formteils abschließt und das optische Erscheinungsbild der Sichtfläche gleichwohl durch die Fasern der Kernlage geprägt oder zumindest mitgeprägt wird. Mit anderen Worten ist die Decklage derart aufgebaut und mit der Kernlage verbunden, dass das optische Erscheinungsbild des Formteils nicht oder nicht ausschließlich durch die Decklage, sondern auch durch den Faser-Verbundwerkstoff der Kernlage geprägt wird. Die Decklage sorgt dafür, dass die Oberfläche des Formteils die Anforderungen an ein Verkleidungsbauteil erfüllt, wie Kraftfestigkeit, Abriebverhalten, UV-Beständigkeit und Medienbeständigkeit, also Widerstandsfähigkeit insbesondere gegen Schmutz und Flüssigkeit, Säure und Basen, etc.

Gemäß einem Aspekt der Erfindung ist die Kernlage aus wenigstens zwei Vlieslagen unterschiedlicher Qualität aufgebaut. Gemäß einem anderen Aspekt der Erfindung sind die Bindefasern Bicomponent-Polyester-Fasern und die Decklage ist aus einer Polypropylen- oder Polyethylen- Folie hergestellt.

In der bevorzugten Ausführung enthält die Kernlage Naturfasern, insbesondere solche aus Kenaf, Hanf, Flachs, Jute oder Sisal. Die Verwendung nachwachsender Rohstoffe sorgt dafür, dass das Endprodukt zumindest zu einem gewissen Grad nachhaltig ist. Zusätzlich resultieren die Naturfasern in einem lebendigen und ansprechenden Erscheinungsbild des fertigen Formteils.

Die thermoplastischen Bicomponent-Fasern umfassen einen innenliegenden Kern und einen außenliegenden Mantel umfassen. Der Kern enthält vorzugsweise ein Polyolefin oder Polyester, wie Polyethylenterephtalat (PET) und der Mantel enthält ein Polyolefin, wie Polyethylen (PE) oder Polypropylen (PP), ein Polyamid (PA) oder auch einen modifizierten Polyestertyp mit niedriger Schmelztemperatur. Der Kern hat eine deutlich höhere Schmelztemperatur als der Mantel. So kann die Schmelztemperatur eines Kerns aus Polyester z.B. bei ungefähr 240°C liegen, während die Schmelztemperatur von Polyethylen, das für den Mantel verwendet werden kann, bei ungefähr 110°C liegt.

Beispiele für Bicomponent-Fasern sind beschrieben in der EP 0 340 763 A1. Solche Fasern haben den Vorteil, dass bei der Erwärmung und Verdichtung des Verbundmaterials aus Naturfasern und Bindefasern nur der Mantel der Bindefasern schmilzt und die Bicomponent-Fasern somit zusätzlich zu der Bindewirkung der Schmelze eine starke dreidimensionale Stützstruktur innerhalb des Vliesverbundes bilden. Darüber hinaus hat sich überraschenderweise gezeigt, dass bei Verwendung von thermoplastischen Bicomponent-Bindefasern zu einem Formteil führt, das trotz der Decklage aus Polypropylen (PP), Polyethylen (PE) oder dergleichen nicht glänzt, sondern ein natürliches mattes Erscheinungsbild hat.

In der bevorzugtes Ausführung des ersten Aspekts der Erfindung wird die Decklage aus einer thermoplastischen Folie hergestellt, beispielsweise aus PP, PA oder PET.

Die Folie kann transparent, semitransparent oder transluzent oder lichtundurchlässig sein. Sie kann klar oder in verschiedenen Tönungen gefärbt sein. Auch die Verwendung von Mehrschichtfolien ist denkbar, beispielsweise durch eine Kombination einer PE- und einer Polyesterschicht, wobei die leichter schmelzende PE-Schicht der Kernlage zugewandt ist.

Die Folie hat eine Dicke im Bereich von ungefähr 10 µm bis 300 µm, insbesondere ungefähr 20 µm bis 200 µm und noch spezieller ungefähr 50 µm bis 100 µm. Die Folie bildet eine Decklage, welche das optische Erscheinungsbild der Fasermischung der Kernlage nicht vollständig verdeckt oder kaschiert. Vorzugsweise ist sie vollständig durchsichtig, so dass sich die Faserstruktur darunter erkennen lässt. Auch bei einer transluzenten, jedoch nicht vollständig durchsichtigen Folie ist die Faserstruktur erkennbar. Wird eine lichtundurchlässige Folie zur Bildung der Decklage gebildet, so ist die Decklage jedenfalls so dünn, dass sich auch durch die Decklage hindurch die Faserstruktur der Kernlage noch erkennen lässt.

Durch die Deckschicht können verschiedene, an die Oberfläche des Formteils gestellte Anforderungen erfüllt werden. Die Deckschicht sollte so gewählt werden, dass die Oberfläche des Formteils kratzfest und abriebfest ist, die Oberfläche sollte ferner UVbeständig sowie medienbeständig, also resistent gegen das Eindringen von Flüssigkeit, Schmutz, Säure, Basen, etc. sein. Diese Eigenschaften können durch geeignete Wahl des Materials für die thermoplastische Folie erreicht werden, wobei eine PP-Folie bevorzugt wird.

In der bevorzugten Ausführung der Erfindung sind auf beiden Seiten der Kernlage Decklagen aufgebracht. Dadurch ist das Formteil beidseitig gegen das Eindringen von Feuchtigkeit und anderen Fremdkörpern geschützt. Ferner wird durch das beidseitige Aufbringen der Decklage sichergestellt, dass sich das Formteil unter Einfluss von Wärme und Feuchtigkeit nicht einseitig verformt oder verzieht.

Das Mischungsverhältnis von Natur- und/oder Synthetikfäser und Bindefaser in der Kernlage kann ungefähr 50:50 betragen. Natur-/Synthetikfasern und Bindefasern können jedoch beispielsweise auch im Verhältnis von ungefähr 40:60 oder ungefähr 60:40 oder in anderen Verhältnissen zwischen diesen Werten oder auch im Bereich von 30:70 bis 70:30 vorgesehen sein.

Auch in Ausführungen der Erfindung gemäß dem zweiten Aspekt kann die Kernlage mit wenigstens zwei Vliesschichten unterschiedlicher Qualität aufgebaut sein. Ein "Deckvlies", also eine Vlieslage, die die Sichtfläche des Formteils bildet, hat eine besonders hohe Faserqualität, während ein darunterliegendes "Trägervlies", also eine Vlieslage, welche von der Sichtfläche abgewandt ist, eine geringere Faserqualität haben kann. Die Faserqualität des "Deckvlieses" auf der Sichtseite der Kernlage sollte so sein, dass der Anteil an Inhomogenitäten, wie faserfremde Bestandteile, z.B. Bastreste, Rinde, Holzteilchen, Schäben, und Fruchtreste, und nicht-aufgelöste Faserbündel, geringer ist als 3 %, vorzugsweise geringer als 1 % und noch stärker bevorzugt geringer als 0,5 %. Solche hochwertigen Fasern sind im Handel als sogenannte "Premiumqualität" erhältlich. Sie wurden bisher im Automobilbereich nicht eingesetzt.

In der vorteilhaften Ausführung der Erfindung sind die Fasern der Kernlage behandelt und/oder ausgerüstet, beispielsweise gefärbt, gebleicht, geklotzt, imprägniert, beschichtet und/oder mit UV-Schutz versehen. Dadurch lässt sich einerseits das optische Erscheinungsbild des Formteils beeinflussen, indem beispielsweise die Naturfaser und die Bindefasern unterschiedlich eingefärbt werden, andererseits lässt sich die Qualität des Formteils erhöhen, beispielsweise hinsichtlich UV-Beständigkeit, Schimmelschutz oder anderer Anforderungen.

Ferner kann die Kernlage derart gestaltet werden, dass nur die Fasern des "Deckvlieses" behandelt, also z.B. gebleicht, gefärbt, geklotzt oder ausgerüstet werden, während darunterliegende Vlieslagen unbehandelt sind.

Die Erfindung schafft somit ein Formteil aus einem Faserverbundmaterial mit einer thermoplastischen Decklage, dessen äußeres optisches Erscheinungsbild durch das Fasermateriäl geprägt wird. Die Decklage dient im Wesentlichen der Versiegelung und dem Schutz des Formteils und schafft eine geschlossene Oberflächenschicht, prägt aber das Aussehen des Formteils nicht, nicht wesentlich oder nicht ausschließlich. Weitere Beschichtungen des Formteils, wie eine Kaschierung, Lackierung, eine Folie oder Dekor, sind nicht vorgesehen. Durch die Mischung von (Natur)Fasern und Bicomponent-Bindefasern kann auch bei Verwendung einer an sich glänzenden PP-Folie oder PE-Folie als Deckschicht eine matte Oberfläche erhalten werden.

Die Erfindung sieht auch ein Verfahren zur Herstellung eines Formteils der oben beschriebenen Art vor. Bei dem Verfahren wird das Vlies der Kernlage in einer Kontaktheizung erwärmt und vorverdichtet, und das vorverdichtete Vlies wird zusammen mit der Decklage in einem Formwerkzeug eingebracht und umgeformt. Dies wird als "One-Step-Process" bezeichnet, weil Vlies und Decklage in einem einzigen Arbeitsschritt zu einem Formteil umgeformt werden; es wird also nicht zuerst das Formteil aus dem Faserverbundmaterial hergestellt und anschließend die Decklage aufgebracht, z.B. aufkaschiert.

In einer ersten Ausführung des Verfahrens kann das Vlies zusammen mit einer thermoplastischen Folie in die Kontaktheizung eingebracht, und die thermoplastische Folie wird mit dem Vlies zur Bildung der Decklage verschmolzen, wobei gleichzeitig das Vlies vorverdichtet wird. Anschließend wird das vorverdichtete Vlies mit der daraufgebildeten Decklage in das Formwerkzeug eingebracht und umgeformt. In einer alternativen Ausführung wird zunächst das Vlies ohne die Decklage in die Kontaktheizung eingebracht und vorverdichtet, und anschließend wird das vorverdichtete Vlies zusammen mit der thermoplastischen Folie in das Formwerkzeug eingebracht. Die thermoplastische Folie wird mit dem Vlies zur Bildung der Decklage in dem Formwerkzeug verschmolzen, und gleichzeitig wird dieser Verbund umgeformt. In beiden Fällen schmilzt die thermoplastische Folie als dünner Film auf das verdichtete Vlies auf. In der Regel wird es genügen, wenn das Vlies und gegebenenfalls die Folie nur in der Kontaktheizung erwärmt werden und anschließend die Umformung in dem Formwerkzeug mit Hilfe der Restwärme erfolgt. Auch das optionale Aufschmelzen der thermoplastischen Folie auf das vorverdichtete Vlies kann aufgrund der Restwärme und mit Hilfe der Schmelze der Bindefasern erfolgen, wobei es jedoch auch möglich ist, die thermoplastische Folie separat aufzuheizen.

Bei dem erfindungsgemäßen Verfahren wird die Kontaktheizung auf eine Temperatur gebracht, die mindestens der Schmelztemperatur der Bindefasern entspricht. Das Formwerkzeug hat eine niedrigere Temperatur.

Die Erfindung ist im Folgenden anhand der Zeichnungen mit weiteren Einzelheiten erläutert. In den Figuren zeigen:
Fig. 1 eine schematische Schnittdarstellung durch das Material eines Formteils gemäß der Erfindung;
Fig. 2a eine schematische Darstellung eines ersten Schrittes des erfindungsgemäßen Herstellungsverfahrens mit einer Kontaktheizung; und
Fig. 2b eine schematische Darstellung eines zweiten Schrittes des erfindungsgemäßen Herstellungsverfahrens mit einem Press-Formwerkzeug.

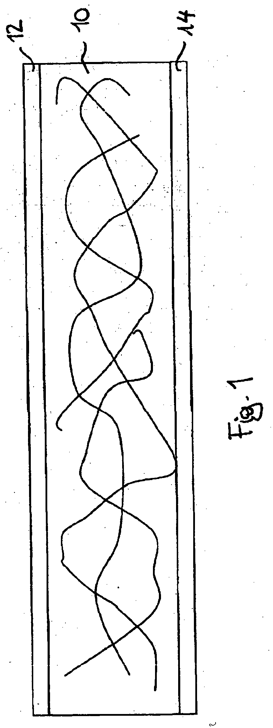

Wie in Fig. 1 gezeigt, besteht das Material des erfindungsgemäßen Formteils aus einer Kernlage 10 und zwei Decklagen 12, 14. Die Kernlage ist ein ein- oder mehrlagiges Vlies aus einer Mischung aus Naturfasern und Bicomponent-Bindefasern. Gemäß dem ersten Aspekt der Erfindung ist die Kernlage einen mehrlagiges Vlies.

Die Naturfasern können beispielsweise aus Kenaf, Hanf, Flachs, Jute oder Sisal sein, wobei vorzugsweise Kenaf oder Flachs verwendet wird. Die Erfindung umfasst auch die Verwendung von synthetischen Fasern und Mischungen aus Natur- und Synthetikfasern.

Die Bicomponent-Bindefasern sind vorzugsweise Fasern mit einem thermoplastischen Kern aus Polyester, wie PET, mit einer relativ hohen Schmelztemperatur und einem Mantel aus einem thermoplastischen Polymer mit einer niedrigeren Schmelztemperatur, wie PE oder PA. Die genaue Wahl des Materials sowie der Schmelztemperaturen von Kern und Mantel sind abhängig von der Anwendung und den an das Formteil gestellten Anforderungen, beispielsweise hinsichtlich der Temperaturbeständigkeit. Wird z.B. das Formteil bei Temperaturen eingesetzt, die in einem Bereich von unter 100°C liegen, so ist es nicht notwendig, Materialien zu verwenden, die eine Schmelztemperatur von 200°C oder darüber haben. Die Verwendung von Materialien mit niedrigerer Schmelztemperatur hat den Vorteil, dass bei der Herstellung des Formteils ein geringerer Energiebedarf entsteht. Die Erfindung umfasst auch die Verwendung von einlagigen synthetischen Bindefasern.

Das Fasergemisch der Kernlage kann in einem Verhältnis von beispielsweise 50:50 aus Naturfaser und Bicomponent-Bindefaser bestehen. Auch Mischungsverhältnisse von 40:60 oder 60:40 oder im einem Bereich von 30:70 bis 70:30 sind je nach Anwendungsfall denkbar.

Das Vliesmaterial der Kernlage sollte möglichst wenig Inhomogenitäten, Flächengewichtsschwankungen oder Naturfaser-typische Verunreinigungen, wie Faserbündel, Holzteilchen, Bastreste, Fruchtreste, Schäben, etc. aufweisen. Entweder das gesamte Vliesmaterial oder zumindest eine Vlieslage auf der Sichtseite des Formteils sollte derartige Inhomogenitäten in einem Anteil von weniger als 3 %, vorzugsweise weniger als 1 % und noch stärker bevorzugt weniger als 0,5 % haben. Um nicht die gesamte Kernlage aus einem solchen hochwertigen und entsprechend teuren Vliesmaterial herstellen zu müssen, kann vorgesehen sein, die Kernlage in mehreren Schichten aufzubauen, wobei das höchstwertige Fasermaterial für die Deckschicht an der Sichtoberfläche des Formteils verwendet wird und darunterliegende Lagen geringere Qualität haben können.

In der Praxis kann die Kernlage vor ihrer Verdichtung eine spezifische Masse im Bereich von etwa 200 bis 2.000 g/m² aufweisen.

Wird für die Kernlage ein Nadelvlies verwendet, so sollte darauf geachtet werden, dass die Oberfläche des Vlieses so wenig wie möglich mit Einstichs-Vernadelungslöchern versehen ist, um eine besonders hohe Qualitätsanmutung der durch die Deckschicht sichtbaren Oberfläche zu erhalten.

Wie eingangs erwähnt, können die Fasern ausgerüstet und/oder behandelt sein, z.B. gebleicht, gefärbt, geklotzt, UV-behandelt oder beschichtet. Dies gilt sowohl für die Naturfaser als auch für die Bicomponent-Bindefaser, welche vorzugsweise unterschiedliche Färbung aufweisen, um eine ansprechende Oberfläche zu erzeugen.

Als Oberflächenschutz sind auf beide Seiten der Kernlage Decklagen in Form einer PP-Folie aufgebracht, wobei die PP-Folie auf die Kernlage aufgeschmolzen wird und so eine Deckschicht bildet. Das Ausgangsmaterial der PP-Folie hat eine Dicke im Bereich von etwa 20 bis 200 µm, spezieller etwa 50 bis 100 µm.

Wenn die Decklage unter Anwendung von Wärme und Druck auf die Kernlage aufgebracht wird, verschmilzt sie mit der Schmelze der Bicomponent-Bindefasern in der Kernlage und bildet so eine innige Verbindung mit der Kernlage. Hieraus ergibt sich eine dünne Beschichtung des Formteils, wobei sich überraschenderweise herausgestellt hat, dass bei Verwendung von Bicomponent-Bindefasern die Deckschicht ein mattes Erscheinungsbild aufweist; während bei der Verwendung von üblichen Synthetik-Bindefasern und einer PP-oder PA-Folie als Deckschicht das Formteil eine glänzende, leicht spiegelnde Oberfläche hätte.

Die Decklage 12, 14 kann transparent, transluzent oder deckend sein; sie kann nach Wunsch gefärbt und/oder ein- oder mehrschichtig sein. In jedem Fall ist die Decklage jedoch so beschaffen, dass sie das optische Erscheinungsbild der Naturfaser bzw. des Fasergemisches der Kernlage nicht vollständig verdeckt. Die Faserstruktur ist durch die Decklage hindurch sichtbar oder jedenfalls für das äußere Erscheinungsbild des Formteils (mit) prägend.

Wie in Fig. 1 gezeigt, wird die Decklage vorzugsweise beidseitig auf die Kernlage aufgebracht, um zu verhindern, dass sich das Formteil verzieht. Ferner kann dadurch ein beidseitiger Schutz des Formteils erreicht werden. Wird nämlich das Formteil z.B. als Instrumententafel in einem Kraftfahrzeug eingesetzt, so sind an seine Unterseite häufig Luftkanäle und andere Bauteile angeschweißt, so dass das Formteil von seiner Unterseite her Feuchtigkeit und anderen Verunreinigungen sowie Wärmeschwankungen ausgesetzt ist, gegen die es geschützt werden muss.

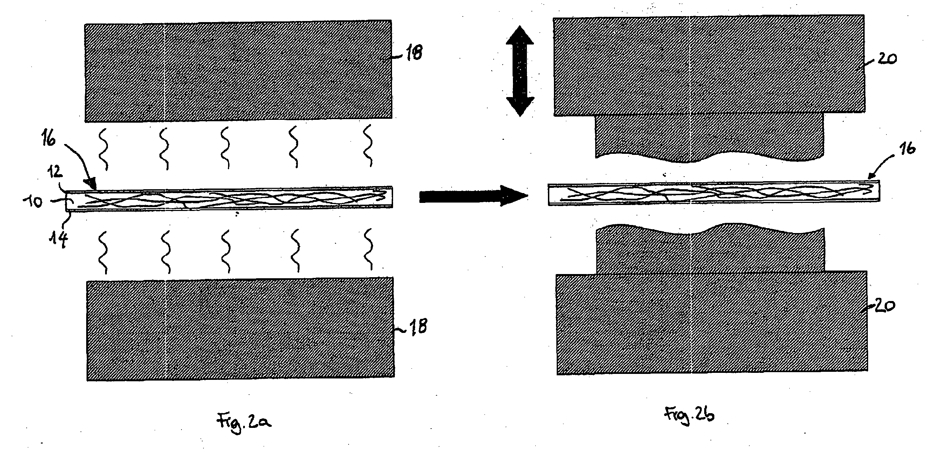

Das erfindungsgemäße Herstellungsverfahren ist im Folgenden anhand der Fig. 2a und 2b erläutert. Das erfindungsgemäße Formteil wird in einem sogenannten One-Step-Process hergestellt. Die Bezeichnung One-Step-Process bezieht sich darauf, dass die Verformung von Kernlage und Decklage in einem Schritt erfolgt und nicht zuerst die Kernlage des Formteils hergestellt und geformt wird und anschließend die Decklage aufgebracht wird.

In einem ersten Schritt des erfindungsgemäßen Verfahrens wird ein Halbzeug 16 aus einer Kernlage 10 und zwei Decklagen 12, 14 in eine Kontaktheizung 18 eingebracht. Das Halbzeug 16 kann aus einem Nadelvlies aus einem Gemisch aus Naturfaser und Bicomponent-Bindefaser bestehen, an das zwei Deckfolien angeheftet sind, alternativ können das Vlies und die Deckfolien separat in die Kontaktheizung eingeführt werden. Die beiden Blöcke der Kontaktheizung 18 werden geschlossen und das Halbzeug wird erwärmt. Dabei wird das Vliesmaterial der Kernlage 10 vorverdichtet und der Verbund wird soweit erhitzt, dass der Mantel der Bicomponent-Bindefasern schmilzt. Durch diese Schmelze verbinden sich sowohl die Fasern der Kernlage 10 als auch die Decklagen 12, 14 mit der Kernlage 10. Gleichzeitig schmilzt die Decklage auf die Kernlage auf und bildet einen dünnen Film, der die Oberfläche der Kernlage versiegelt.

Die Kontaktheizung 18 wird geöffnet und das vorverdichtete, erwärmte Halbzeug 16 wird in eine Formpresse 20 eingebracht, wie in Fig. 2b gezeigt. Beim Schließen der Formpresse 20 wird die Kernlage 10 gemeinsam mit den Decklagen 12, 14 verformt und in die gewünschte Gestalt gebracht.

Während die Kontaktheizung 18 beispielsweise auf eine Temperatur im Bereich zwischen. 180°C und 220°C aufgeheizt ist, ist das Formwerkzeug 20 im Wesentlichen kalt oder lediglich gering temperiert, beispielsweise in einem Temperaturbereich von 30°C bis 50°C. Das Halbzeug 16 gibt seine Temperatur an das Form-Presswerkzeug 20 ab und die Schmelze der Bicomponent-Bindefasern sowie der Decklagen erstarrt, um ein stabiles Formteil zu bilden.

In der Praxis kann das Formteil beispielsweise ausgehend von einer Vliesmatte mit einer Dicke von etwa 10 mm hergestellt werden, wobei diese Matte in der Kontaktheizung aufgeheizt und auf eine Dicke von z.B. 4 mm vorverdichtet wird. Dieser Prozess kann etwa 60 Sekunden dauern. Dabei werden sowohl die Mäntel der Bicomponent-Fasern als auch die Deckfolie aufgeschmolzen, um einen Oberflächenschutz sowie einen innigen Verbund des gesamten Formteils zu bilden.

Dieses vorverdichtete Halbzeug wird anschließend in das Press-Formwerkzeug geführt und nochmals verdichtet, z.B. auf eine Enddicke von etwa 2 bis 3 mm, und umgeformt.

Während in der bevorzugten Ausführungsform die Deckfolie bereits in die Kontaktheizung 18 miteingebracht wird, um als dünner Film auf die Vliesmatte aufzuschmelzen, kann in einer alternativen Ausführung die Deckfolie auch erst in das Press-Werkzeug 20 eingebrächt werden. Sie verbindet sich dann mit der Vliesmatte aufgrund der in dieser noch vorhandenen Schmelze der Bicomponent-Bindefasern. Gegebenenfalls kann die Deckfolie selbst auch erwärmt werden, bevor sie in das Press-Formwerkzeug 20 eingebracht werden.

Nach dem Verpressen des Formteils ist kein zusätzlicher Kaschierungs- oder anderer Beschichtungsprozess vorgesehen.

## Patentansprüche

1. Formteil, insbesondere Innraum-Verkleidungsbauteil für ein Kraftfahrzeug, mit:
einer Kernlage (10) umfassend eine Mischung aus Natur- und/oder Synthetikfasern und thermoplastischen Bindefasern, die zu einem Vlies verarbeitet sind, wobei die Kernlage (10) aus wenigstens zwei Vliesschichten mit unterschiedlicher Qualität aufgebaut ist, und einer thermoplastischen Decklage (12, 14), wobei
die Kernlage (10) und die Decklage (12, 14) miteinander verschmolzen sind und die Decklage (12, 14) so gestaltet ist, dass das Formteil eine Sichtfläche aufweist, die durch die Decklage abgeschlossen wird, wobei das optische Erscheinungsbild der Sichtfläche durch die Fasern der Kernlage (10) zumindest mitgeprägt ist; wobei die Decklage (12, 14) aus einer thermoplastischen Folie hergestellt ist und die Folie eine Dicke von 10 µm bis 300 µm hat.

2. Formteil, insbesondere Innraum-Verkleidungsbauteil für ein Kraftfahrzeug, mit:
einer Kernlage (10) umfassend eine Mischung aus Natur- und/oder Synthetikfasern und thermoplastischen Bindefasern, die zu einem Vlies verarbeitet sind, wobei die Bindefasern Bicomponent-Polyester-Fasern umfassen, und
einer thermoplastischen Decklage (12, 14), wobei
die Kernlage (10) und die Decklage (12, 14) miteinander verschmolzen sind und die Decklage (12, 14) so gestaltet ist, dass das Formteil eine Sichtfläche aufweist, die durch die Decklage abgeschlossen wird, wobei das optische Erscheinungsbild der Sichtfläche durch die Fasern der Kernlage (10) zumindest mitgeprägt ist; wobei
die Decklage (12, 14) aus einer thermoplastischen Folie hergestellt ist und die Folie eine Dicke von 10 µm bis 300 µm hat.

3. Formteil nach Anspruch 1 oder 2, bei dem die die Folie eine Dicke von 20 µm bis 200 µm hat.

4. Formteil nach Anspruch 1 oder 2, bei dem die Folie eine Dicke von 50 µm bis 100 µm hat.

5. Formteil nach einem der vorangehenden Ansprüche, bei dem die Kernlage (10) Naturfasern, insbesondere solche aus Kenaf, Hanf, Flachs, Jute, Sisal, enthält.

6. Formteil nach einem der Ansprüche 1 und 3 bis 5, bei dem die Bindefasern Bicomponent-Polyester-Fasern umfassen.

7. Formteil nach einem der vorangehenden Ansprüche, wobei die Folie transparent, semitransparent oder lichtundurchlässig ist.

8. Formteil nach einem der vorangehenden Ansprüche, bei dem auf beide Seiten der Kernlage (10) eine Decklage (12, 14) aufgebracht ist.

9. Formteil nach einem der vorangehenden Ansprüche, bei dem das Mischungsverhältnis von Natur- und/oder Synthetikfasern und Bindefasern in der Kernlage (10) 50:50, 40:60 oder 60:40 beträgt.

10. Formteil nach einem der Ansprüche 2 bis 9, bei dem die Kernlage (10) aus wenigstens zwei Vliesschichten mit unterschiedlicher Qualität aufgebaut ist.

11. Formteil nach einem der vorangehenden Ansprüche, bei dem die Kernlage (10) wenigstens auf ihrer Sichtseite eine Lage eines Vlieses aufweist, in welcher der Anteil an Inhomogenitäten , wie faserfremde Bestandteile, wie Bastreste, Rinde, Holzteilchen, Schäben und Fruchtreste, und nicht aufgelöste Faserbündel, geringer ist als 3 %, vorzugsweise geringer als 1 %, noch stärker bevorzugt geringer als 0,5 %.

12. Formteil nach den Ansprüchen 10 und 11, bei dem die Kernlage (10) auf ihrer von der Sichtseite abgewandten Seite eine Lage eines Vlieses aufweist, in welcher der Anteil an Inhomogenitäten größer ist als auf der Sichtseite der Kernlage.

13. Formteil nach einem der vorangehenden Ansprüchen, bei dem die Fasern der Kernlage (10) behandelt und/oder ausgerüstet, insbesondere gefärbt, gebleicht, geklotzt, imprägniert, beschichtet und/oder mit UV-Schutz versehen, sind.

14. Formteil nach einem der vorangehenden Ansprüche, bei dem die Sichtfläche des Formteils matt ist.

15. Formteil nach einem der vorangehenden Ansprüche, wobei keine Kaschierung oder andere Beschichtung außer der Decklage auf das Formteil aufgebracht ist.

16. Verfahren zur Herstellung eines Formteils nach einem der vorangehenden Ansprüche, bei dem
das Vlies der Kernlage (10) in einer Kontaktheizung (18) erwärmt und vorverdichtet wird und
das vorverdichtete Vlies zusammen mit der Decklage (12, 14) in ein Formwerkzeug (20) eingebracht und umgeformt wird.

17. Verfahren nach Anspruch 16, bei dem
das Vlies zusammen mit einer thermoplastischen Folie in die Kontaktheizung (18) eingebracht und die thermoplastische Folie mit dem Vlies zur Bildung der Decklage (12, 14) verschmolzen wird oder
das Vlies ohne die Decklage (12, 14) in die Kontaktheizung (18) eingebracht und vorverdichtet wird und anschließend das vorverdichtete Vlies zusammen mit der thermoplastischen Folie in das Formwerkzeug (20) eingebracht und die thermoplastische Folie mit dem Vlies zur Bildung der Decklage (12, 14) verschmolzen wird,
so dass die thermoplastische Folie als ein dünner Film auf das verdichtete Vlies aufschmilzt.

18. Verfahren nach Anspruch 16 oder 17, bei dem die Kontaktheizung (18) auf eine Temperatur gebracht wird, die mindestens der Schmelztemperatur der Bindefasern entspricht und das Formwerkzeug (20) eine niedrigere Temperatur hat.

## Claims

1. A moulded part, in particular interior trim part for a motor vehicle, having:
a core layer (10) comprising a mixture consisting of natural and/or synthetic fibres and thermoplastic binding fibres, which are processed to form a non-woven material, the core layer is made of at least two non-woven layers of different quality; and
a thermoplastic covering layer (12, 14), wherein
the core layer (10) and the covering layer (12, 14) are melted with each other and the covering layer (12, 14) is designed in such a manner that the moulded part has a visible surface which is completed by the covering layer, wherein the optical appearance of the visible surface is at least partially influenced by the fibres of the core layer (10); wherein
the cover layer (12, 14) is produced from a thermoplastic film and the film has a thickness of 10 µm to 300 µm.

2. A moulded part, in particular interior trim part for a motor vehicle, having:
a core layer (10) comprising a mixture consisting of natural and/or synthetic fibres and thermoplastic binding fibres, which are processed to form a non-woven material, wherein the binding fibres comprise bicomponent polyester fiberes; and
a thermoplastic covering layer (12, 14), wherein
the core layer (10) and the covering layer (12, 14) are melted with each other and the covering layer (12, 14) is designed in such a manner that the moulded part has a visible surface which is completed by the covering layer, wherein the optical appearance of the visible surface is at least partially influenced by the fibres of the core layer (10); wherein
the cover layer (12, 14) is produced from a polypropylene or polyethylene thermoplastic film and the film has a thickness of 10 µm to 300 µm.

3. The moulded part according to Claim 1 or 2, in which the film has a thickness of 20 µm to 200 µm.

4. The moulded part according to Claim 1 or 2, in which the film has a thickness of 50 µm to 100 µm.

5. The moulded part according to one of the preceding claims, in which the core layer (10) contains natural fibres, in particular those of kenaf, hemp, flax, jute, sisal.

6. The moulded part according to one of claims 1 and 3 to 5, in which the binding fibres comprise bicomponent polyester fibres.

7. The moulded part according to one of the preceding claims, wherein the film is transparent, semi-transparent or opaque.

8. The moulded part according to one of the preceding claims, in which a covering layer (12, 14) is applied to both sides of the core layer (10).

9. The moulded part according to one of the preceding claims, in which the mixture ratio of natural and/or synthetic fibres and binding fibres in the core layer (10) is 50:50, 40:60 or 60:40.

10. The moulded part according to one of claims 2 to 9, in which the core layer (10) is constructed of at least two non-woven layers of different quality.

11. The moulded part according to one of the preceding claims, in which the core layer (10) has at least on its visible side a layer of a non-woven material, in which the proportion of inhomogeneities, such as non-fibre constituents, such as bast residues, bark, wood particles, shives and fruit residues, and undissolved fibre bundles, is less than 3%, preferably less than 1%, even more preferably less than 0.5%.

12. The moulded part according to Claims 10 and 11, in which the core layer (10) has on its side facing away from the visible side a layer of a non-woven material in which the proportion of inhomogeneities is greater than on the visible side of the core layer.

13. The moulded part according to one of the preceding claims, in which the fibres of the core layer (10) are treated and/or finished, in particular dyed, bleached, padded, impregnated, coated and/or provided with UV protection.

14. The moulded part according to one of the preceding claims, in which the visible surface of the moulded part is matte.

15. The moulded part according to one of the preceding claims, wherein no lamination or other coating is applied to the moulded part except for the covering layer.

16. A method for producing a moulded part according to one of the preceding claims, in which
the non-woven material of the core layer (10) is heated and pre-compressed in a contact heating system (18), and
the pre-compressed non-woven material is introduced together with the covering layer (12, 14) into a moulding tool (20) and shaped.

17. The method according to Claim 16, in which
the non-woven material is introduced together with a thermoplastic film into the contact heating system (18) and the thermoplastic film is melted with the non-woven material to form the covering layer (12, 14), or
the non-woven material is introduced into the contact heating system (18) without the covering layer (12, 14) and pre-compressed, and then the pre-compressed non-woven material is introduced together with the thermoplastic film into the moulding tool (20) and the thermoplastic film is melted with the non-woven material to form the covering layer (12, 14),
so that the thermoplastic film melts onto the compressed non-woven material as a thin film.

18. The method according to Claim 16 or 17, in which the contact heating system (18) is brought to a temperature which corresponds to at least the melting temperature of the binding fibres, and the moulding tool (20) has a lower temperature.

## Revendications

1. Pièce moulée, en particulier élément de garniture pour l'habitacle intérieur d'un véhicule à moteur, comportant une couche centrale (10), comprenant un mélange de fibres naturelles et/ou de fibres synthétiques et de fibres de liaison thermoplastiques, transformées en un non-tissé, la couche centrale (10) étant faite d'au moins deux couches de non-tissé de qualité différente, et une couche de couverture thermoplastique (12, 14), la couche centrale (10) et la couche de couverture (12, 14) étant fondues ensemble, et la couche de couverture (12, 14) étant configurée de telle sorte que la pièce moulée présente une surface visible, qui est recouverte par la couche de couverture, l'aspect optique de la surface visible étant pour le moins influencé par les fibres de la couche centrale (10) ; la couche de couverture (12, 14) étant fabriquée à partir d'une feuille thermoplastique, et la feuille ayant une épaisseur de 10 à 300 µm.

2. Pièce moulée, en particulier élément de garniture pour l'habitacle intérieur d'un véhicule à moteur, comportant une couche centrale (10), comprenant un mélange de fibres naturelles et/ou de fibres synthétiques et de fibres de liaison thermoplastiques, transformées en un non-tissé, les fibres de liaison comprenant des fibres de polyester bicomposantes, et une couche de couverture thermoplastique (12, 14), la couche centrale (10) et la couche de couverture (12, 14) étant fondues ensemble, et la couche de couverture (12, 14) étant configurée de telle sorte que la pièce moulée présente une surface visible, qui est recouverte par la couche de couverture, l'aspect optique de la surface visible étant pour le moins influencé par les fibres de la couche centrale (10) ; la couche de couverture (12, 14) étant fabriquée à partir d'une feuille de polypropylène ou de polyéthylène thermoplastique, et la feuille ayant une épaisseur de 10 à 300 µm.

3. Pièce moulée selon la revendication 1 ou 2, dans laquelle la feuille a une épaisseur de 20 à 200 µm.

4. Pièce moulée selon la revendication 1 ou 2, dans laquelle la feuille a une épaisseur de 50 à 100 µm.

5. Pièce moulée selon l'une des revendications précédentes, dans laquelle la couche centrale (10) contient des fibres naturelles, en particulier des fibres naturelles de kénaf, de chanvre, de lin, de jute, de sisal.

6. Pièce moulée selon l'une des revendications 1 et 3 à 5, dans laquelle les fibres de liaison comprennent des fibres de polyester bicomposantes.

7. Pièce moulée selon l'une des revendications précédentes, dans laquelle la feuille est transparente, semi-transparente ou opaque.

8. Pièce moulée selon l'une des revendications précédentes, dans laquelle une couche de couverture (12, 14) est appliquée sur les deux côtés de la couche centrale (10).

9. Pièce moulée selon l'une des revendications précédentes dans laquelle le rapport de mélange des fibres naturelles et/ou synthétiques et des fibres de liaison dans la couche centrale (10) est de 50:50, de 40:60 ou de 60:40.

10. Pièce moulée selon l'une des revendications 2 à 9, dans laquelle la couche centrale (10) est constituée d'au moins deux couches de non-tissé ayant des qualités différentes.

11. Pièce moulée selon l'une des revendications précédentes, dans laquelle la couche centrale (10) comprend, sur au moins sa face visible, une couche d'un non-tissé, dans laquelle la proportion des défauts d'homogénéité, tels que des constituants non fibreux, tels que des filasses, des écorces, des particules de bois, des chènevottes et des résidus de fruits, ainsi que des faisceaux de fibres non dissous, est inférieure à 3 %, de préférence inférieure à 1 %, d'une manière encore plus préférée inférieure à 0,5 %.

12. Pièce moulée selon les revendications 10 et 11, dans laquelle la couche centrale (10) présente, sur son côté opposé au côté visible, une couche d'un non-tissé, dans laquelle la proportion des défauts d'homogénéité est supérieure à celle qu'elle est sur la face visible de la couche centrale.

13. Pièce moulée selon l'une des revendications précédentes, dans laquelle les fibres de la couche centrale (10) sont traitées et/ou apprêtées, en particulier teintes, blanchies, foulardées, imprégnées, enduites et/ou pourvues d'une protection UV.

14. Pièce moulée selon l'une des revendications précédentes, dans laquelle la surface visible de la pièce moulée est mate.

15. Pièce moulée selon l'une des revendications précédentes, dans laquelle aucun contre-collage ni aucun autre revêtement, à part la couche de couverture, n'est appliqué sur la pièce moulée.

16. Procédé de fabrication d'une pièce moulée selon l'une des revendications précédentes, dans lequel le non-tissé de la couche centrale (10) est chauffé dans un dispositif de chauffage par contact (18) et est pré-compacté, et le non-tissé pré-compacté est, en même temps que la couche de couverture (12, 14), introduit et façonné dans un moule (20).

17. Procédé selon la revendication 16, dans lequel le non-tissé, en même temps qu'une feuille thermoplastique, est introduit dans la dispositif de chauffage par contact (18), et la feuille thermoplastique est fondue avec le non-tissé pour former la couche de couverture (12, 14), ou le non-tissé, sans la couche de couverture (12, 14), est introduit dans le dispositif de chauffage par contact (18) et est pré-compacté, puis le non-tissé pré-compacté, en même temps que la feuille thermoplastique, est introduit dans le moule (20), et la feuille thermoplastique est moulée avec le non-tissé pour former la couche de couverture (12, 14), de telle sorte que la feuille thermoplastique fonde sous forme d'un film mince sur le non-tissé compacté.

18. Procédé selon la revendication 16 ou 17, dans lequel le dispositif de chauffage par contact (18) est porté à une température qui correspond au moins à la température de fusion des fibres de liaison, le moule (20) ayant une température plus basse.
